# EUROPEAN PATENT APPLICATION

(11) **EP 2 187 349 A1**
(43) Date of publication of application: **19.05.2010**
(21) Application number: 08001709.8
(22) Date of filing: 30.01.2008
(51) Int. Cl.: G06Q 30/00, G06Q 20/00

(54) **Method for settlement of cash payments for concluding commerce by means of internet and cash payment system**

(30) Priority: 01.12.2006 CZ 20060759
(71) Applicant: Kalfus,, Jan, 12000 Prague 2 (CZ)
(72) Inventor: Kalfus,, Jan, 12000 Prague 2 (CZ)
(74) Representative: Plicka, Josef

(57) **Abstract**

A method for settlement of cash payment for concluding commerce or shopping between customer and merchant trading on the Internet by means of cashdesks communicating by the Internet, after the customer conducts business/purchase in the Internet shop of the merchant, the method comprising the steps of: a) selecting (adopting) the process for settlement of payment by means of cash payment system (CPS), b) informing the merchant module (MM) of identification of business/purchase and the payment amount of business/purchase, c) redirecting the customer to pages of code generator of cash payment system (CPS), d) generating of cash payment system (CPS) code, e) storing the identification of business/purchase and payment amount of business/purchase into the cash payment system (CPS) database, f) storing the assigned cash payment system (CPS) code into the cash payment system (CPS) database and affiliating this code to the identification of business/purchase and payment amount of business/purchase in order to establish unmistakable identification of the particular payment by means of cash payment system (CPS), g) informing the customer of cash payment system (CPS) code and payment amount, h) customer settles the payment identified by the cash payment system (CPS) code on the cashdesk terminal, i) cashdesk provides information of settlement of the particular payment for the particular cash payment system (CPS) code to the cashdesk module (CDM), j) information of payment received from the cashdesk module (CDM) is compared in cash payment system (CPS) with the content of cash payment system (CPS) database, k) if consistency (match) is found, cash payment system (CPS) marks the payment for cash payment system (CPS) code as settled, 1) cash payment system (CPS) informs the merchant of settlement of payment for designated identification of business/purchase in the given amount, m) cash payment system (CPS) publishes on the publicly available Internet page disclosing settled payment status (PS) that the payment for cash payment system (CPS) code is registered and the merchant is informed.

## Description

### TECHNICAL FIELD

The present invention relates generally to a method for settlement of cash payments for concluding commerce by means of Internet as well as to a cash payment system.

### BACKGROUND ART

The presently known methods and systems for settlement of cash payments for concluding bargain by means of Internet suffer from significant drawbacks, because they do not allow for the customers to conduct the discrete (anonymous) cash payment 24 hours daily, 365 days throughout the year, in order that the merchant can be very quickly informed and can prepare the goods for dispatch or process the services.

In the existing systems the customer of Internet trade must either identify his person including his address, or his cash card, or his bank account, and in most cases combination of these personal data.

Furthermore, the' present systems do not allow for the customers to check quickly the payment status of the payment settled by the system, i.e. to establish if the system has registered the respective payment and the merchant has been informed accordingly (advise of payment).

### SUMMARY OF THE INVENTION

Definition of basic terms and expressions

### Customer (client) (C)

Any individual person or legal entity complying with the following conditions:
- has access to the Internet,
- wishes to conclude a business/purchase with the merchant trading on the Internet,
- accepts the business conditions of a company practising cash payment system (CPS).

### Merchant (M)

Any practitioner of Internet business complying with the following conditions:
- identifies the respective trading cases/purchases in coded form,
- has a contractual relationship with a company practising cash payment system (CPS),
- is able to integrate and observe the arranged interface of cash payment system (CPS),
- and therefore is an owner of a qualified certificate for information interchange with the company practising cash payment system (CPS).

### Cashdesk (CD)

Company complying with the following conditions:
- has an extensive network of localities for physical contact with customers,
- is able to receive cash payments from customers identified by the cash payment system (CPS) code,
- is able to issue written confirmation for customers on the settlement of the conducted cash payment according the format defined by the company practising cash payment system (CPS),
- is able to inform in agreed time limit (in order of minutes) the company practising cash payment system (CPS) about settled cash payment by means of the Internet network by agreed interface,
- has concluded contractual agreement with the company practising cash payment system (CPS),
- has ability to receive information in the form of bar code,
- has access to the information pages of cash payment system (CPS) for possible checking the cash payment system (CPS) code and the payment amount.

### Cash payment system (CPS)

Data set of application program equipment in Internet network realizing in its summary cash payment connection between customer and merchant by means of cashdesks (CD) and banks.

### Cash payment system (CPS) code

Under the term "cash payment system (CPS) code" it is understood cash payment system (CPS) number generated by cash payment system (CPS) in two equivalent forms, and namely as cash payment system (CPS) number and cash payment system (CPS) bar code. Number generated by cash payment system (CPS) unambiguously identifies the business/purchase, amount of cash payment, and the merchant in delimited time interval.

This numeric series can be protected by control algorithm. This number can have delimited term of validity (in order of days, weeks, years).

After expiry of the basic term of validity and after expiry of safety time limit the cash payment system (CPS) number can be used again.

Obligatory form of and technical conditions for the cash payment system (CPS) code in the form of cash payment system (CPS) number or cash payment system (CPS) bar code are part and parcel of the cash payment system (CPS).

### Identification of the business/purchase

Chain-sequence of characters defined by the merchant and unambiguously defining the merchant and the particular business/purchase with the merchant

### Cash payment system (CPS) database

Application equipment of cash payment system (CPS) securing the hard connection of identification the business/purchase, payment amount, and cash payment system (CPS) code.

### Settled payment status (SPS)

Publicly available Internet page publishing the list of cash payment system (CPS) codes for which the payment has been settled in the past period (without any information of the settled amount).

In accordance with a preferred embodiment of the present invention, there is provided a method for settlement of cash payment for concluding commerce or shopping between customer and merchant trading on the Internet by means of cashdesks communicating by the Internet, after the customer conducts business/purchase in the Internet shop of the merchant, the method comprising the steps of:
a) selecting (adopting) the process for settlement of payment by means of cash payment system (CPS),
b) informing the merchant module (MM) of identification of business/purchase and the payment amount of business/purchase,
c) redirecting the customer to pages of code generator of cash payment system (CPS),
d) generating of cash payment system (CPS) code,
e) storing the identification of business/purchase and payment amount of business/purchase into the cash payment system (CPS) database,
f) storing the assigned cash payment system (CPS) code into the cash payment system (CPS) database and affiliating this code to the identification of business/purchase and payment amount of business/purchase in order to establish unmistakable identification of the particular payment by means of cash payment system (CPS),
g) informing the customer of cash payment system (CPS) code and payment amount,
h) customer settles the payment identified by the cash payment system (CPS) code on the cashdesk terminal,
i) cashdesk provides information of settlement of the particular payment for the particular cash payment system (CPS) code to the cashdesk module (CDM),
j) information of payment received from the cashdesk module (CDM) is compared in cash payment system (CPS) with the content of cash payment system (CPS) database,
k) if consistency (match) is found, cash payment system (CPS) marks the payment for cash payment system (CPS) code as settled,
l) cash payment system (CPS) informs the merchant of settlement of payment for designated identification of business/purchase in the given amount,
m) cash payment system (CPS) publishes on the publicly available Internet page disclosing settled payment status (PS) that the payment for cash payment system (CPS) code is registered and the merchant is informed.

Cash payment system (CPS) code can be advantageously in the form of series of characters or symbols.

Cash payment system (CPS) code can be preferably in the form of series of numeric characters.

Cash payment system (CPS) code can be advantageously generated as random series of characters, or according to the given algorithm.

Series of numeric characters of cash payment system (CPS) code can be preferably at least three-digit.

In a preferred embodiment of the present invention, series of numeric characters of cash payment system (CPS) code can be in the form of bar code.

Cash payment system (CPS) code can be preferably in the form of alphanumeric series of characters.

Cash payment system (CPS) code can be advantageously generated as abstract value without any apparent relation to the conducted business/purchase.

In accordance with another aspect of the present invention, there is further provided a cash payment system (CPS) for settlement of cash payments for concluding commerce by means of Internet for conducting the method according to claims 1 to 8 and comprising:
merchant module (MM), which merchant is practising cash payment system (CPS),
cashdesk module (CDM), which cashdesk is practising cash payment system (CPS),
wherein the system further comprises:
code generator (CG) for generation of cash payment system (CPS) code,
cash payment system (CPS) database (CPS DB),
settled payment status (SPS).

### BRIEF DESCRIPTION OF THE DRAWINGS

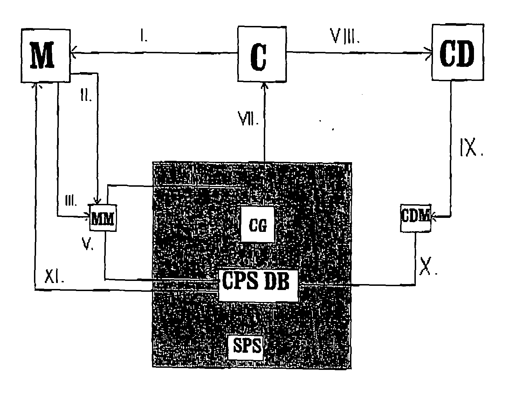

These, as well as other objects and advantages of this invention, will be more completely understood and appreciated by careful study of the embodiment of the invention taken in conjunction with the accompanying schematic sole drawing, showing the present cash payment system (CPS) and the processes in this cash payment system (CPS) according to the present invention.

The individual blocks are identified as follows:
M - merchants trading by means of the Internet network
C - customers of the Internet trades
CD - cashdesks - the terminals of companies capable to receive cash payments and communicate these data on the Internet
MM - merchant module - module of information exchange with merchants
CDM - cashdesk module - module of information exchange with cashdesks
CG - code generator for generating cash payment system (CPS) code
CPS DB - cash payment system (CPS) database
SPS - settled payment status

processes in the cash payment system (CPS) designated by Roman numerals I through XII in the Figure are as follows:
I. Customer has entered the Internet shop of the merchant. Customer has decided to make a payment by means of cash payment system (CPS).
II. Customer is redirected to pages of merchant module (MM).
III. Merchant simultaneously informs of the business/purchase identification and payment amount relating to the particular business/purchase with the customer.
IV. Customer accepts the business conditions and is redirected to the pages of the code generator (CG) for generating the cash payment system (CPS) code.
V. Identification of the business/purchase and the payment amount to be paid by the customer are stored into the cash payment system (CPS) database.
VI. Assigned cash payment system (CPS) code is entered into the cash payment system (CPS) database and is affiliated to the identification of the business/purchase and to the payment amount - in this way an unmistakable identification of payment by means of cash payment system (CPS) is established.
VII. Customer is informed of the cash payment system (CPS) code and the payment amount, and the customer is redirected back to the pages of the merchant.
VIII. Customer has settled his payment on the cashdesk terminal; customer has marked this payment by the cash payment system (CPS) code.
IX. Cashdesk provides information to the cashdesk module (CDM) by means of the Internet network that for the particular cash payment system (CPS) code the payment in due amount has been settled.
X. Information of settled payment received from the cashdesk module is compared with the cash payment system (CPS) database content; if the match is found, then the system will qualify the payment for the cash payment system (CPS) code as settled.
XI. Cash payment system (CPS) informs the merchant that the payment for the indicated identification of the business/purchase in the given amount has been settled.
XII. Cash payment system (CPS) will publish on the publicly available Internet page for settled payment status (SPS) the anonymous information that the payment for issued cash payment system (CPS) code is registered and the merchant is informed about this fact.

### DETAILED DESCRIPTION OF THE INVENTION

Cash payment system (CPS) represents a unique and original solution for settlement of cash payments on the Internet. It can arrange extremely rapid settlement of Internet trades for that customers preferring discrete settlement of a given price for business/purchase in cash by means of a dense network of cashdesks.

Cash payment system (CPS) guarantees an unmistakable identification of business transaction in the delimited period of time without requesting any further information different from identification required by the merchant.

Cash payment system (CPS) takes over the identification of business/purchase established by the merchant on entering into business relation with customer, and by means of adding its own cash payment system (CPS) code it completes an unmistakable identification for cash payment on any cashdesk terminal or in any bank in the given time period.

If the customer decides, in the course of concluding the Internet business/purchase, to pay by means of cash payment system, he is automaticaly redirected to web pages of cash payment system (CPS), where a window of cash payment system (CPS) is opened. Customer accepts the business conditions and then a window for generating cash payment system (CPS) code for the concrete business/purchase is automaticaly opened.

Cash payment system (CPS) code is on principle issued in the form of numeric series and/or in the form of bar code. Cash payment system (CPS) code then can be printed in both forms or stored on workspace of customer's PC as remark.

After completion of this operation the customer is automaticaly returned back to pages of merchant, where he can complete the business transaction.

Established code can be effective for delimited time period in order of days (for example 7 days). In this period it is possible to settle given price using cash payment system (CPS) code on any place having functional cashdesk terminal.

On the basis of cash payment the cashdesk issues proof of payment being reliable document not only for exact identification of payment, but also for possible complaints procedure.

Company practising cash payment system (CPS) receives in order of minutes (on-line or till 10 minutes) an information from cashdesk, and on the basis of this information notifies in order of minutes (on-line or till 10 minutes) the merchant, who is business partner of customer, on settlement of the payment.

This company also publishes on publicly available Internet page "settled payment status (SPS)" an anonymous information that the payment has been settled for particular cash payment system (CPS) code (no amount is indicated).

Customer can check on this page that merchant has been informed about payment. In this way the time to settle the particular business/purchase is extremely reduced, even if the financial settlement between contracting parties has not yet been completed.

On the basis of secure information of company practising cash payment system (CPS) the merchant can conduct the settlement of business/purchase (delivery of goods or other commodity) with the customer. Transfers of financial resources are then carried out independently on settlement of the business relations with the customer.

Cash payment system (CPS) is also functional and purposeful when payment is made by means of banks. In this case the cash payment system (CPS) code is mentioned as variable symbol.

Proof of payment issued by cashdesk comprises full identification of cashdesk place and full identification of the company practising cash payment system (CPS). Itfurther comprises at least indication that the matter relates to the settlement of Internet business/purchase by means of cash payment system (CPS), date and time of payment, amount of settled payment, and cash payment system (CPS) code, for which the payment has been settled.

### Example

A preferred embodiment of the method for settlement of cash payments for concluding commerce by the Internet is conducted as follows:
1. The customer of the Internet trade in the final phase of concluding business/purchase selects from offer of possibilities how to settle the price for concluded bargain with the merchant the following method - "by means of cash payment system (CPS)".
2. After this offer "settlement by means of cash payment system (CPS)" is confirmed, the customer is temporarily redirected from the Internet page of merchant to the Internet page of cash payment system (CPS).
3. After acceptance of business conditions of the company practising cash payment system (CPS) the generator is displayed; the generator displays for the customer a cash payment system (CPS) code, i.e. allocated cash payment system (CPS) number, and also in the from of cash payment system (CPS) bar code (for example: cash payment system (CPS) number: 123456789), and an amount of payment to be settled (for example: CZK 550,-).
4. Concurrently the database of merchant is connected with the company practising cash payment system (CPS). Within the bounds of this relationship the merchant notifies identification of business/purchase (for example: 2345) just concluded with the customer, and the amount of payment to be settled by the customer (for example: CZK 550,-).
   This information from the merchant (identification of business/purchase and amount of payment to be settled) is stored in cash payment system (CPS) database in tight connection with allocated cash payment system (CPS) number (for example: 123456789 - 2345 - 550). Unmistakable identification for the given business/purchase is thus established. Validity of this identification is equal to the duration of validity of cash payment system (CPS) code.
5. Before leaving the Internet page of the company practising cash payment system (CPS) the customer is informed that cash payment system (CPS) code can have time limited duration of validity. Afterwards he is redirected back to pages of merchant.
6. During the period of validity of cash payment system (CPS) code the customer can settle the price identified by cash payment system (CPS) code for the business/purchase concluded with the merchant on any cashdesk.
7. If the price of concluded business/purchase is settled in cash at cashdesk, this cashdesk by return (in order of minutes) informs the company practising cash payment system (CPS) that the payment (for example: CZK 550,-) has been settled for the particular cash payment system (CPS) code (for example: 123456789).
8. On the basis of comparison of cash payment system (CPS) number (123456789) and settled amount (CZK 550,-) in cash payment system (CPS) database, the respective information that the price for business/purchase has been settled is published in order of minutes.
9. Company practising cash payment system (CPS) provides the merchant with this information at an arranged manner and publishes this information on its publicly accessible Internet page "settled payment status (SPS)" for customers as an anonymous information that the settled payment for the particular cash payment system (CPS) number is registered.
10. Merchant can settle the business/purchase with the customer earlier (in order of dozens of minutes) than the financial settlement between the contracting parties concerned (cashdesk, company practising cash payment system (CPS), and merchant) is carried out.

The subject matter of the present invention has, in particular, the following advantages:

The cash payment system (CPS) according to the present invention allows in hitherto unknown manner to make payments in cash for goods and services sold on the Internet without necessity that the customer must disclose into the Internet network his confidential and restricted data (e.g. name, address, cash card number, bank account number, etc.), which data could be abused. Also the subject matter of the business/purchase remains confidential.

Cash payment system (CPS) allows utilization of dense network of cashdesks, which cashdesks are altogether very easy available and opened practically 24 hours a day and 365 days a year, for example, networks of companies practising petrol stations, department stores, supermarkets, tobacco shops, betting shops, transport services, etc.

Identification of particular payment by means of cash payment system (CPS) code provides an unique possibility to preserve the customer's anonymity both in view of his personal data and the commodity paid in this manner.

Cash payment system (CPS) code can be generated as random series of characters, symbols or numbers. Its generation can be subject to algorithm selected for particular area or case.

Nevertheless, cash payment system (CPS) code represents for third person only fully abstract series of characters that as such does not provide any information.

Further advantage of cash payment system (CPS) is promptness; the merchant is speedily informed that the payment for particular business/purchase has been settled. As regards the commodities delivered by means of the Internet network, as e.g. music, film, software products, etc., the speed of information on the settlement of payment is especially important.

Last but not least the advantage of cash payment system (CPS) is freely accessible information for the customer about "destiny" of his payment. The customer can, on freely available Internet page "settled payment status (SPS)" in a very simple fashion, only by entry of cash payment system (CPS) code, identify if the settled payment has been registered by cash payment system (CPS), and if the merchant has been informed accordingly on the fact that the respective payment has been settled.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

### Reference list

- M -: merchant
- C -: customer
- CD -: cashdesk
- MM -: merchant module
- CG -: code generator
- CDM -: cashdesk module
- CPS -: cash payment system
- CPS DB -: cash payment system database
- SPS -: settled payment status

## Claims

1. A method for settlement of cash payment for concluding commerce or shopping between customer and merchant trading on the Internet by means of cashdesks communicating by the Internet, after the customer conducts business/purchase in the Internet shop of the merchant, the method comprising the steps of:
a) selecting (adopting) the process for settlement of payment by means of cash payment system (CPS),
b) informing the merchant module (MM) of identification of business/purchase and the payment amount of business/purchase,
c) redirecting the customer to pages of code generator of cash payment system (CPS),
d) generating of cash payment system (CPS) code,
e) storing the identification of business/purchase and payment amount of business/purchase into the cash payment system (CPS) database,
f) storing the assigned cash payment system (CPS) code into the cash payment system (CPS) database and affiliating this code to the identification of business/purchase and payment amount of business/purchase in order to establish unmistakable identification of the particular payment by means of cash payment system (CPS),
g) informing the customer of cash payment system (CPS) code and payment amount,
h) customer settles the payment identified by the cash payment system (CPS) code on the cashdesk terminal,
i) cashdesk provides information of settlement of the particular payment for the particular cash payment system (CPS) code to the cashdesk module (CDM),
j) information of payment received from the cashdesk module (CDM) is compared in cash payment system (CPS) with the content of cash payment system (CPS) database,
k) if consistency (match) is found, cash payment system (CPS) marks the payment for cash payment system (CPS) code as settled,
l) cash payment system (CPS) informs the merchant of settlement of payment for designated identification of business/purchase in the given amount,
m) cash payment system (CPS) publishes on the publicly available Internet page disclosing settled payment status (PS) that the payment for cash payment system (CPS) code is registered and the merchant is informed.

2. The method according to claim 1, wherein cash payment system (CPS) code is in the form of series of characters or symbols.

3. The method according to claim 1 and 2, wherein cash payment system (CPS) code is in the form of series of numeric characters.

4. The method according to claim 1 and 2, wherein cash payment system (CPS) code is generated as random series of characters, or according to the given algorithm.

5. The method according to claim 1 and 2, wherein series of numeric characters of cash payment system (CPS) code is at least three-digit.

6. The method according to claim 1 to 3, wherein series of numeric characters of cash payment system (CPS) code is in the form of bar code.

7. The method according to claim 1 and 2, wherein cash payment system (CPS) code is in the form of alphanumeric series of characters.

8. The method according to claim 1, wherein cash payment system (CPS) code is generated as abstract value without any apparent relation to the conducted business/purchase.

9. Cash payment system (CPS) for settlement of cash payments for concluding commerce by means of Internet for conducting the method according to claims 1 to 8 and comprising:
merchant module (MM), which merchant is practising cash payment system (CPS),
cashdesk module (CDM), which cashdesk is practising cash payment system (CPS),
wherein the system further comprises:
code generator (CG) for generation of cash payment system (CPS) code,
cash payment system (CPS) database (CPS DB),
settled payment status (SPS).
